# EUROPÄISCHE PATENTSCHRIFT

(11) **EP 2 769 463 B1**
(45) Veröffentlichungstag und Bekanntmachung des Hinweises auf die Patenterteilung: **26.07.2017**
(21) Anmeldenummer: 12769989.0
(22) Anmeldetag: 12.09.2012
(51) Int. Cl.: H02M 7/487, H02M 7/483, B60L 11/18, H02M 7/49, H02P 6/28

(54) **UMRICHTEREINHEIT FÜR EINE ASYNCHRONMASCHINE**
CONVERTER UNIT FOR AN ASYNCHRONOUS MACHINE
UNITÉ CONVERTISSEUR POUR UNE MACHINE ASYNCHRONE

(30) Priorität: 18.10.2011 DE 102011084698
(43) Veröffentlichungstag der Anmeldung: 27.08.2014
(73) Patentinhaber: Robert Bosch GmbH, 70442 Stuttgart (DE); Samsung SDI Co., Ltd., Yongin-si, Gyeonggi-do 446-577 (KR)
(72) Erfinder: SCHMIDT, Ralph, 71384 Weinstadt (DE); FETZER, Joachim, 73342 Bad-Ditzenbach (DE); BUTZMANN, Stefan, 71717 Beilstein (DE); FINK, Holger, 70567 Stuttgart (DE)
(74) Vertreter: Bee, Joachim
(86) Internationale Anmeldenummer: PCT/EP2012/067790
(87) Internationale Veröffentlichungsnummer: WO 2013/056900

(56) Entgegenhaltungen:
- WO-A2-2012/152586
- US-A- 5 642 275
- US-A1- 2011 198 936

## Beschreibung

Die vorliegende Erfindung betrifft eine Umrichtereinheit für eine Asynchronmaschine sowie eine Batterie und eine Antriebseinheit, welche die erfindungsgemäße Umrichtereinheit umfassen.

### Stand der Technik

Es zeichnet sich ab, dass in Zukunft sowohl bei stationären Anwendungen als auch bei Fahrzeugen wie Hybrid- und Elektrofahrzeugen vermehrt Batteriesysteme zum Einsatz kommen werden. Um die für eine jeweilige Anwendung gegebenen Anforderungen an Spannung und zur Verfügung stellbare Leistung erfüllen zu können, wird eine hohe Zahl von Batteriezellen in Serie geschaltet. Da der von einer solchen Batterie bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen. Dies kann entweder durch Vorsehen von mehreren Zellwickeln innerhalb eines Batteriezellengehäuses oder durch externes Verschalten von Batteriezellen geschehen. Dabei ist jedoch problematisch, dass es aufgrund nicht exakt identischer Zellkapazitäten und -spannungen zu Ausgleichsströmen zwischen den parallel geschalteten Batteriezellen kommen kann.

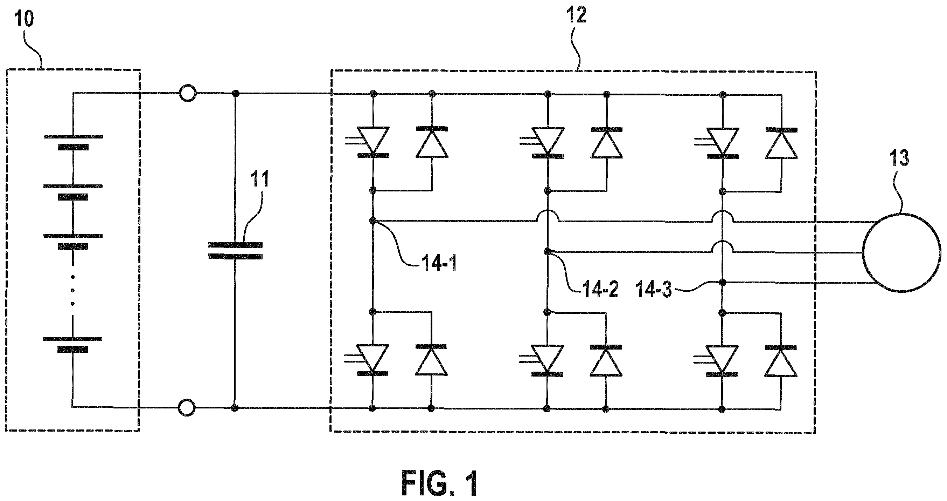

Das Prinzipschaltbild einer üblichen elektrischen Antriebseinheit, wie sie beispielsweise in Elektro- und Hybrid-Fahrzeugen oder auch in stationären Anwendungen wie bei der Rotorblattverstellung von Windkraftanlagen zum Einsatz kommt, ist in Figur 1 dargestellt. Eine Batterie 10 ist an einen Gleichspannungszwischenkreis angeschlossen, welcher durch einen Zwischenkreiskondensator 11 gepuffert wird. An den Gleichspannungszwischenkreis angeschlossen ist ein Pulswechselrichter 12, der über jeweils zwei schaltbare Halbleiterventile und zwei Dioden an drei Abgriffen 14-1, 14-2, 14-3 gegeneinander phasenversetzte Sinusströme für den Betrieb eines elektrischen Antriebsmotors 13 bereitstellt. Die Kapazität des Zwischenkreiskondensators 11 muss groß genug sein, um die Spannung im Gleichspannungszwischenkreis für eine Zeitdauer, in der eines der schaltbaren Halbleiterventile durchgeschaltet wird, zu stabilisieren. In einer praktischen Anwendung wie einem Elektrofahrzeug ergibt sich eine hohe Kapazität im Bereich von mF.

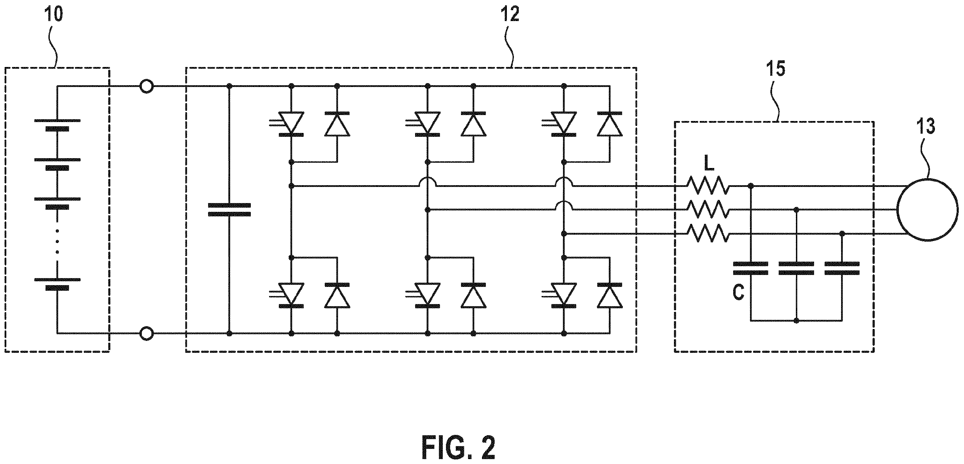

Wird bei der in Figur 1 dargestellten Anordnung als elektrischer Antriebsmotor 13 eine Asynchronmaschine verwendet, so ist nachteilig, dass die erreichbare Leistung bei hohen Drehzahlen durch die Wirbelstromverluste im Läufer der Asynchronmaschine begrenzt wird. Diese Verluste rühren von den starken Oberschwingungen im Strom her, die durch die hohen Potentialdifferenzen des Pulswechselrichters 12 und die dadurch auftretenden hohen Werte der zeitlichen Stromänderung verursacht werden. Um diese Verluste zu reduzieren, ist es heute üblich, zwischen den Pulswechselrichter 12 und die Asynchronmaschine 13 ein Filter 15 zu schalten, wie in Figur 2 dargestellt. Durch dieses Filter 15 werden die Oberschwingungen im Strom verringert, so dass die Verluste reduziert werden und ein Betrieb bei hoher Drehzahl erst sinnvoll möglich wird. Allerdings erhöht das Filter 15 die Komplexität einer erforderlichen Regelstrecke erheblich, beansprucht Bauraum und stellt auch einen erheblichen Kostenfaktor dar.
Ein Schaltkreisarrangement mit Multilevel Konverter ist etwa aus US 2011/0198936 A1 bekannt. US 5 642 275 beschreibt einen Multilevel-Kaskaden Spannungsquellinverter mit separaten Gleichspannungsquellen.

### Offenbarung der Erfindung

Erfindungsgemäß wird eine Umrichtereinheit mit mindestens einem Ausgang bereitgestellt. Der Ausgang der Umrichtereinheit ist an eine Spule einer Asynchronmaschine anschließbar, und die Umrichtereinheit ist dazu ausgelegt, an ihrem Ausgang mehrere Spannungsstufen zur Verfügung zu stellen.
Die Umrichtereinheit umfasst einen Multilevel-Inverter mit mindestens einem Ausgang. Der Ausgang des Multilevel-Inverters bildet den Ausgang der Neue Umrichtereinheit. Hierdurch ist es möglich, eine hochdrehende Asynchronmaschine ohne Zwischenschaltung eines Filters, wie er in Figur 2 dargestellt ist, zu betreiben, ohne dass nennenswerte Wirbelstromverluste in der Asynchronmaschine anfallen. Somit wird ein Betrieb der Asynchronmaschine bei hohen Drehzahlen und hohen Leistungen möglich. Da eine Asynchronmaschine im Vergleich zu einer Synchronmaschine wesentlich kostengünstiger ist und durch die Verwendung der erfindungsgemäßen Umrichtereinheit auf ein zusätzliches Filter verzichtet werden kann, ist insgesamt die Möglichkeit gegeben, eine kostengünstige elektrische Antriebseinheit bereitzustellen.

Bevorzugt ist, dass die Umrichtereinheit dazu ausgelegt ist, an ihrem Ausgang ein im Wesentlichen sinusförmiges Spannungssignal vorbestimmter Frequenz zur Verfügung zu stellen. Da die Spannung am Ausgang der Umrichtereinheit stufig einstellbar ist, kann ein sinusförmiger Verlauf nur näherungsweise erreicht werden. Im Rahmen der Erfindung ist es jedoch ausreichend, ein Spannungssignal zur Verfügung zu stellen, welches durch die Verwendung einer ausreichend hohen Anzahl von Spannungsstufen so stark an einen idealen sinusförmigen Verlauf angenähert ist, dass die Funktionsweise der Asynchronmaschine nicht beeinträchtigt wird und die zeitlichen Änderungen des Stromes in der Spule der Asynchronmaschine nicht zu hoch sind.

Typischerweise umfasst die Umrichtereinheit drei Ausgänge, welche an die gewöhnlicherweise benutzten drei Spulen in einem Ständer der Asynchronmaschine anschließbar sind.

In der Ausführungsform der Erfindung ist vorgesehen, dass die Umrichtereinheit mindestens einen Batteriemodulstrang mit einer Mehrzahl von in Serie geschalteten Batteriemodulen umfasst. Jedes Batteriemodul umfasst wenigstens eine Batteriezelle, wenigstens eine Koppeleinheit, einen ersten Anschluss und einen zweiten Anschluss. Jedes der Batteriemodule ist dazu ausgebildet, in Abhängigkeit einer Ansteuerung der Koppeleinheit einen von mindestens drei Schaltzuständen einzunehmen. Hierbei entsprechen verschiedene Schaltzustände unterschiedlichen Spannungswerten zwischen dem ersten Anschluss und dem zweiten Anschluss des Batteriemoduls, das heißt, es sind verschiedene Spannungen zwischen dem ersten Anschluss und dem zweiten Anschluss abgreifbar.

In der beansprüchten Ausführungsform ist das Batteriemodul dazu ausgebildet, in Abhängigkeit einer Ansteuerung der Koppeleinheit wahlweise einen von mindestens drei Schaltzuständen einzunehmen. In einem ersten Schaltzustand sind der erste Anschluss und der zweite Anschluss des Batteriemoduls verbunden. In einem zweiten Schaltzustand ist die wenigstens eine Batteriezelle zwischen den ersten Anschluss und den zweiten Anschluss mit einer ersten (zum Beispiel positiven) Polarität geschaltet. In einem dritten Schaltzustand ist die wenigstens eine Batteriezelle zwischen den ersten Anschluss und den zweiten Anschluss mit einer der ersten entgegengesetzten (im gleichen Beispiel negativen) Polarität geschaltet.

Die verschiedenen Ausführungsformen der Batteriemodule beziehungsweise Koppeleinheiten können innerhalb eines Batteriemodulstrangs auch gemischt vorliegen.

Die beansprüchte Ausführungsform der Umrichtereinheit ist dadurch gekennzeichnet, dass die Umrichtereinheit einen Batteriemodulstrang mit den oben beschriebenen Batteriemodulen umfasst und an dem Batteriemodulstrang mehrere Mittelabgriffe angeordnet sind. An den Mittelabgriffen ist ein Potential an einer Verbindung zwischen jeweils zwei Neue Batteriemodulen abgreifbar. Die Eingänge des Multilevel-Inverters sind mit den Mittelabgriffen verbunden.

Ein weiterer Aspekt der Erfindung betrifft eine Batterie, bevorzugt eine Lithium-Ionen-Batterie, mit mindestens einer erfindungsgemäßen Umrichtereinheit. Ein weiterer Aspekt der Erfindung betrifft eine Antriebseinheit mit mindestens einer Asynchronmaschine sowie mindestens einer erfindungsgemäßen Umrichtereinheit oder auch einer Batterie mit der erfindungsgemäßen Umrichtereinheit. Der Ausgang der Umrichtereinheit ist hierbei an eine Spule der Asynchronmaschine angeschlossen.

Ein weiterer Aspekt der Erfindung betrifft ein Kraftfahrzeug mit der erfindungsgemäßen Antriebseinheit.

Insgesamt wird durch die erfindungsgemäße Umrichtereinheit eine Anordnung bereitgestellt, bei welcher die Differenz zwischen einer Sollspannung und einer tatsächlich am Ausgang der Umrichtereinheit abgreifbaren Spannung kleiner als bei einer Umrichtereinheit gemäß dem Stand der Technik ist.

### Zeichnungen

Das Ausführungsbeispiel der Erfindung wird anhand der Zeichnungen und der nachfolgenden Beschreibung näher erläutert, wobei gleiche Bezugszeichen gleiche oder funktional gleichartige Komponenten bezeichnen. Es zeigen:
Figuren 1 und 2 jeweils eine elektrische Antriebseinheit gemäß dem Stand der Technik,
Figur 3 eine Koppeleinheit, die in in einer nicht zur Erfindung gehörenden Umrichtereinheit verwendbar ist,
Figur 4 eine erste nicht zur Erfindung gehörende Ausführungsform der Koppeleinheit,
Figur 5 eine zweite nicht zur Erfindung gehörende Ausführungsform der Koppeleinheit,
Figur 6 die zweite nicht zur Erfindung gehörende Ausführungsform der Koppeleinheit in einer einfachen Halbleiterschaltung,
Figuren 7 und 8 zwei Anordnungen der Koppeleinheit in einem Batteriemodul,
Figur 9 die in Figur 6 dargestellte Koppeleinheit in der in Figur 7 dargestellten Anordnung,
Figur 10 eine elektrische Antriebseinheit mit einer Umrichtereinheit gemäß einer nicht zur Erfindung gehörenden Ausführungsform,
Figur 11 eine Ansteuerung der in Figur 10 gezeigten Umrichtereinheit durch ein Steuergerät,
Figur 12 eine Ausführungsform der Koppeleinheit, welche ermöglicht, dass zwischen den Anschlüssen eines Batteriemoduls eine Spannung mit wählbarer Polarität anliegt,
Figur 13 eine Ausführungsform des Batteriemoduls mit der in Figur 12 dargestellten Koppeleinheit,
Figur 14 eine elektrische Antriebseinheit mit einer Umrichtereinheit gemäß der Ausführungsform der Erfindung,
Figur 15 ein Beispiel eines vierstufigen Multilevel-Inverters, welcher in der Umrichtereinheit gemäß der Ausführungsform der Erfindung einsetzbar ist, und
Figur 16 einen zeitlichen Verlauf einer an einem der Ausgänge der erfindungsgemäßen Umrichtereinheit anliegenden Spannung.

### Ausführungsformen der Erfindung

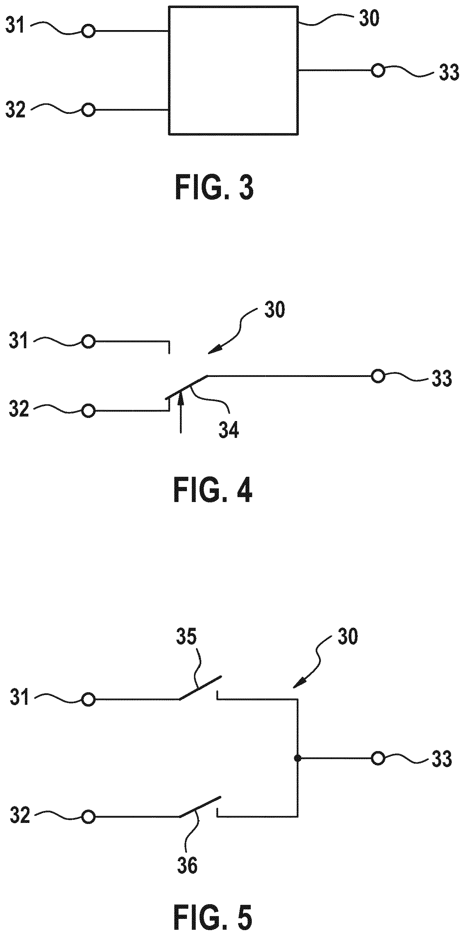

Figur 3 zeigt eine Koppeleinheit 30, die in einer nicht zur Erfindung gehörenden Umrichtereinheit 90 verwendbar ist. Die Koppeleinheit 30 besitzt zwei Eingänge 31 und 32 sowie einen Ausgang 33 und ist dazu ausgebildet, einen der Eingänge 31 oder 32 mit dem Ausgang 33 zu verbinden und den anderen abzukoppeln. Bei bestimmten Ausführungsformen der Koppeleinheit 30 kann diese außerdem ausgebildet sein, beide Eingänge 31, 32 vom Ausgang 33 abzutrennen. Nicht vorgesehen ist jedoch, sowohl den Eingang 31 als auch den Eingang 32 mit dem Ausgang 33 zu verbinden.

Figur 4 zeigt eine erste Ausführungsform der Koppeleinheit 30, welche über einen Wechselschalter 34 verfügt, welcher prinzipiell nur einen der beiden Eingänge 31, 32 mit dem Ausgang 33 verbinden kann, während der jeweils andere Eingang 31, 32 vom Ausgang 33 abgekoppelt wird. Der Wechselschalter 34 kann besonders einfach als elektromechanischer Schalter realisiert werden.

Figur 5 zeigt eine zweite Ausführungsform der Koppeleinheit 30, bei der ein erster und ein zweiter Schalter 35 beziehungsweise 36 vorgesehen sind. Jeder der Schalter 35, 36 ist zwischen einen der Eingänge 31 beziehungsweise 32 und den Ausgang 33 geschaltet. Im Gegensatz zu der Ausführungsform von Figur 4 bietet diese Ausführungsform den Vorteil, dass auch beide Eingänge 31, 32 vom Ausgang 33 abgekoppelt werden können, so dass der Ausgang 33 hochohmig wird. Zudem können die Schalter 35, 36 einfach als Halbleiterschalter wie zum Beispiel Metall-Oxid-Halbleiter-Feldeffekttransistor (MOSFET)-Schalter oder Insulated Gate Bipolar Transistor (IGBT)-Schalter verwirklicht werden. Halbleiterschalter haben den Vorteil eines günstigen Preises und einer hohen Schaltgeschwindigkeit, so dass die Koppeleinheit 30 innerhalb einer geringen Zeit auf ein Steuersignal beziehungsweise eine Änderung des Steuersignals reagieren kann und hohe Umschaltraten erreichbar sind.

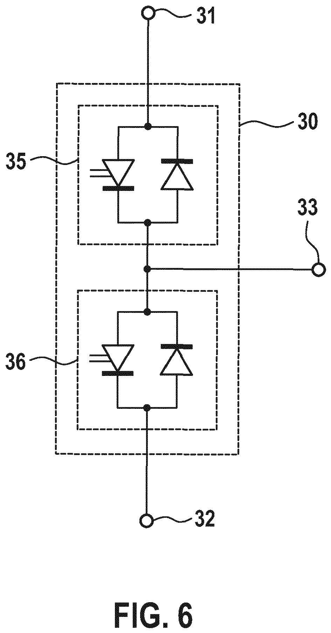

Figur 6 zeigt die zweite Ausführungsform der Koppeleinheit in einer einfachen Halbleiterschaltung, bei welcher jeder der Schalter 35, 36 aus jeweils einem ein- und ausschaltbaren Halbleiterventil und einer zu diesem antiparallel geschalteten Diode besteht.

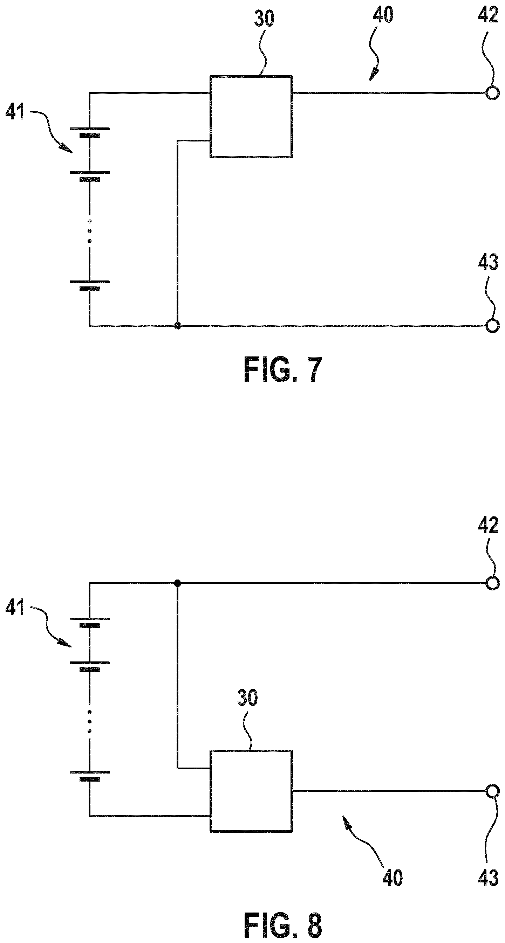

Die Figuren 7 und 8 zeigen zwei Anordnungen der Koppeleinheit 30 in einem Batteriemodul 40. Eine Mehrzahl von Batteriezellen 41 ist zwischen die Eingänge einer Koppeleinheit 30 in Serie geschaltet. Es kann jedoch auch nur eine einzelne Batteriezelle vorgesehen sein oder aber eine Parallelschaltung oder gemischt-seriell-parallele Schaltung von Batteriezellen. Im Beispiel der Figur 7 sind der Ausgang der Koppeleinheit 30 mit einem ersten Anschluss 42 und der negative Pol der Batteriezellen 41 mit einem zweiten Anschluss 43 verbunden. Es ist jedoch eine spiegelbildliche Anordnung wie in Figur 8 möglich, bei der der positive Pol der Batteriezellen 41 mit dem ersten Anschluss 42 und der Ausgang der Koppeleinheit 30 mit dem zweiten Anschluss 43 verbunden sind.

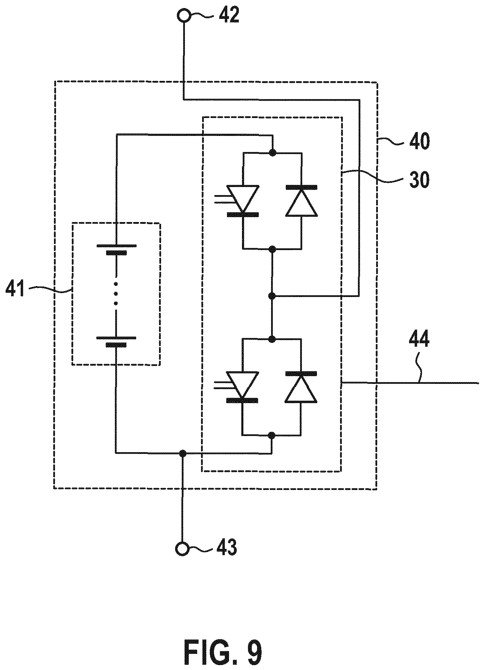

Figur 9 zeigt die in Figur 6 dargestellte Koppeleinheit 30 in der in Figur 7 dargestellten Anordnung. Eine Ansteuerung und Diagnose der Koppeleinheiten 30 erfolgt über eine Signalleitung 44, welche mit einem nicht dargestellten Steuergerät verbunden ist. Insgesamt ist es möglich, zwischen den Anschlüssen 42 und 43 des Batteriemoduls 40 entweder 0 Volt oder eine Spannung U_{mod} einzustellen.

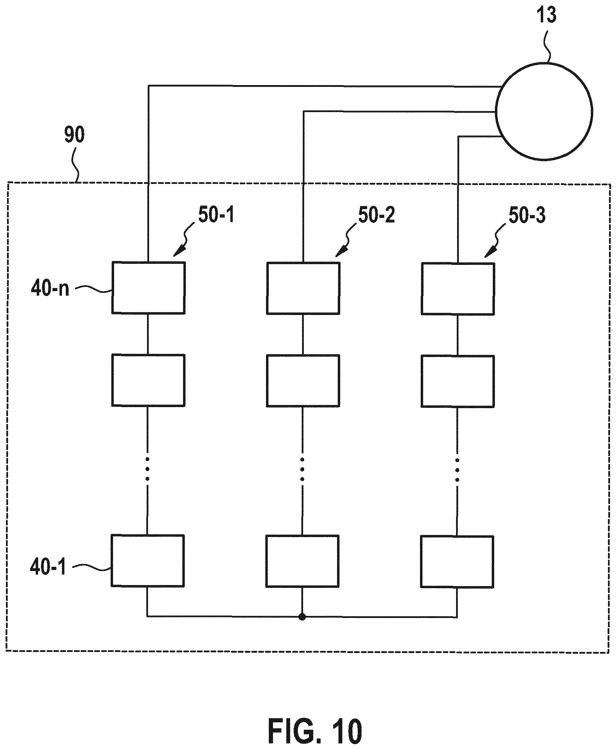

Figur 10 zeigt eine elektrische Antriebseinheit mit einem Asynchronmotor beziehungsweise einer Asynchronmaschine 13 und mit einer Umrichtereinheit 90 gemäß einer nicht zur Erfindung gehörenden Ausführungsform. In einem Ständer (Stator) der Asynchronmaschine 13 sind drei Spulen so angeordnet, dass sich bei entsprechender Ansteuerung ein magnetisches Drehfeld ausbildet. Ein Läufer (Rotor) der Asynchronmaschine 13 besteht aus einzelnen Leitern, die parallel zur Drehachse verlaufen und entweder an ihren Enden miteinander kurzgeschossen sind oder aber den auftretenden Strom über Schleifringe abführen.

Während des Betriebes induziert das in den Spulen des Ständers erzeugte magnetische Drehfeld in den Leitungen des Läufers eine Spannung, die einen Stromfluss zur Folge hat. Aus dem Zusammenwirken des Stromflusses mit dem Magnetfeld bildet sich das Drehmoment, so dass der Läufer sich dreht.

Im Gegensatz zu dem Fall einer Synchronmaschine kann der Läufer in einer Asynchronmaschine prinzipbedingt die Drehzahl des Feldes nicht erreichen, sondern weicht von dieser ab.

Die drei Spulen der in Figur 10 gezeigten Asynchronmaschine 13 sind mit Enden von drei Batteriemodulsträngen 50-1, 50-2, 50-3 verbunden, welche zusammen die Umrichtereinheit 90 gemäß der ersten Ausführungsform der Erfindung bilden. Jeder der drei Batteriemodulstränge 50-1, 50-2, 50-3 besteht aus einer Mehrzahl von in Serie geschalteten Batteriemodulen 40-1, ..., 40-n, die jeweils eine Koppeleinheit 30 umfassen und wie in Figur 7 oder 8 dargestellt aufgebaut sind. Bei dem Zusammensetzen von Batteriemodulen 40-1, ..., 40-n zu einem der Batteriemodulstränge 50-1, 50-2, 50-3 wird jeweils der erste Anschluss 42 eines Batteriemoduls 40-1, ..., 40-n mit dem zweiten Anschluss 43 eines benachbarten Batteriemoduls 40-1, ..., 40-n verbunden. Auf diese Weise kann eine gestufte Ausgangsspannung in jedem der drei Batteriemodulstränge 50-1, 50-2, 50-3 erzeugt werden.

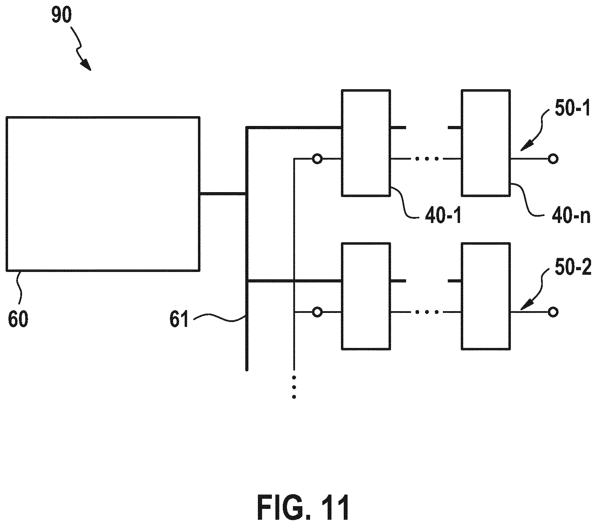

Ein in Figur 11 gezeigtes Steuergerät 60 ist dazu ausgebildet, an eine variable Anzahl von Batteriemodulen 40-1, ..., 40-n in den drei Batteriemodulsträngen 50-1, 50-2, 50-3 über einen Datenbus 61 ein erstes Steuersignal auszugeben, durch welches die Koppeleinheiten 30 der so angesteuerten Batteriemodule 40-1, ..., 40-n die Batteriezelle (beziehungsweise die Batteriezellen) 41 zwischen den ersten Anschluss 42 und den zweiten Anschluss 43 des jeweiligen Batteriemoduls 40-1, ..., 40-n schalten. Gleichzeitig gibt das Steuergerät 60 an die restlichen Batteriemodule 40-1, ..., 40-n ein zweites Steuersignal aus, durch welches die Koppeleinheiten 30 dieser restlichen Batteriemodule 40-1, ..., 40-n den ersten Anschluss 42 und den zweiten Anschluss 43 des jeweiligen Batteriemoduls 40-1, ..., 40-n verbinden, wodurch dessen Batteriezellen 41 überbrückt werden.

Durch geeignete Ansteuerung der Mehrzahl von Batteriemodulen 40-1, ..., 40-n in den drei Batteriemodulsträngen 50-1, 50-2, 50-3 können somit drei sinusförmige Ausgangsspannungen erzeugt werden, zwischen denen eine Phasenverschiebung von 120° besteht. Hierdurch fließen in den Spulen des Ständers der Asynchronmaschine 13 sinusförmige Ströme mit einer Phasenverschiebung von 120°.

In der Ausführungsform gemäß der Erfindung ist vorgesehen, dass die in den drei Batteriemodulsträngen 50-1, 50-2, 50-3 verwendeten Batteriemodule 40-1, ..., 40-n dazu ausgebildet sind, ihre Batteriezellen 41 derart zwischen den ersten Anschluss 42 und den zweiten Anschluss 43 zu schalten, dass eine Polarität der zwischen dem ersten Anschluss 42 und dem zweiten Anschluss 43 anliegenden Spannung in Abhängigkeit einer Ansteuerung der Koppeleinheit wählbar ist.

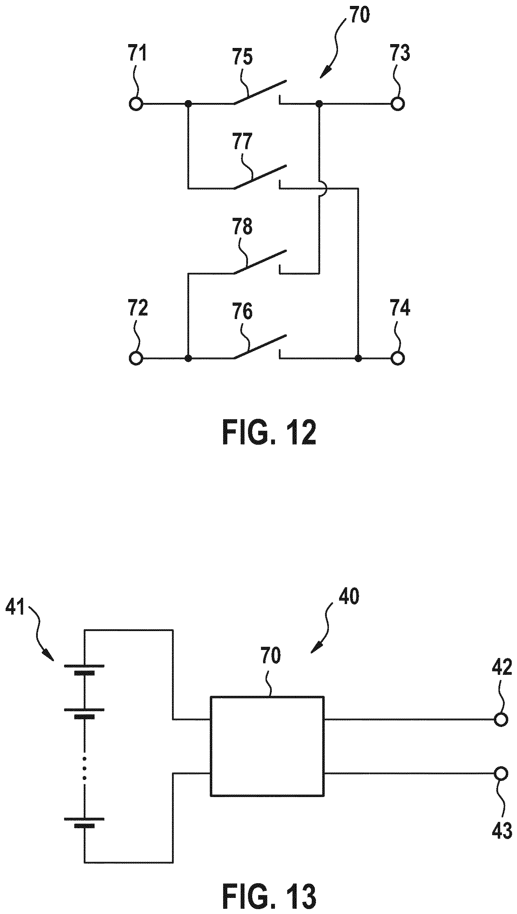

Figur 12 zeigt die Ausführungsform einer Koppeleinheit 70, welche dies ermöglicht und bei welcher ein erster, ein zweiter, ein dritter und ein vierter Schalter 75, 76, 77 und 78 vorgesehen sind. Der erste Schalter 75 ist zwischen einen ersten Eingang 71 und einen ersten Ausgang 73 geschaltet, der zweite Schalter 76 ist zwischen einen zweiten Eingang 72 und einen zweiten Ausgang 74, der dritte Schalter 77 zwischen den ersten Eingang 71 und den zweiten Ausgang 74 und der vierte Schalter 78 zwischen den zweiten Eingang 72 und den ersten Ausgang 73 geschaltet.

Die Figur 13 zeigt eine Ausführungsform des Batteriemoduls 40 mit der in Figur 12 dargestellten Koppeleinheit. Der erste Ausgang der Koppeleinheit 70 ist mit dem ersten Anschluss 42 und der zweite Ausgang der Koppeleinheit 70 mit dem zweiten Anschluss 43 des Batteriemoduls 40 verbunden. Das so aufgebaute Batteriemodul 40 hat den Vorteil, dass die Batteriezellen 41 durch die Koppeleinheit 70 in einer wählbaren Polarität mit den Anschlüssen 42, 43 verbunden werden können, so dass eine Ausgangsspannung unterschiedlicher Vorzeichen erzeugt werden kann. Auch kann es möglich sein, beispielsweise durch Schließen der Schalter 76 und 78 und gleichzeitiges Öffnen der Schalter 75 und 77 (oder aber durch Öffnen der Schalter 76 und 78 sowie Schließen der Schalter 75 und 77), die Anschlüsse 42 und 43 miteinander leitend zu verbinden und eine Ausgangsspannung von 0 V zu erzeugen. Insgesamt ist es somit möglich, zwischen den Anschlüssen 42 und 43 des Batteriemoduls 40 entweder 0 Volt, die Spannung U_{mod} oder die Spannung -U_{mod} einzustellen.

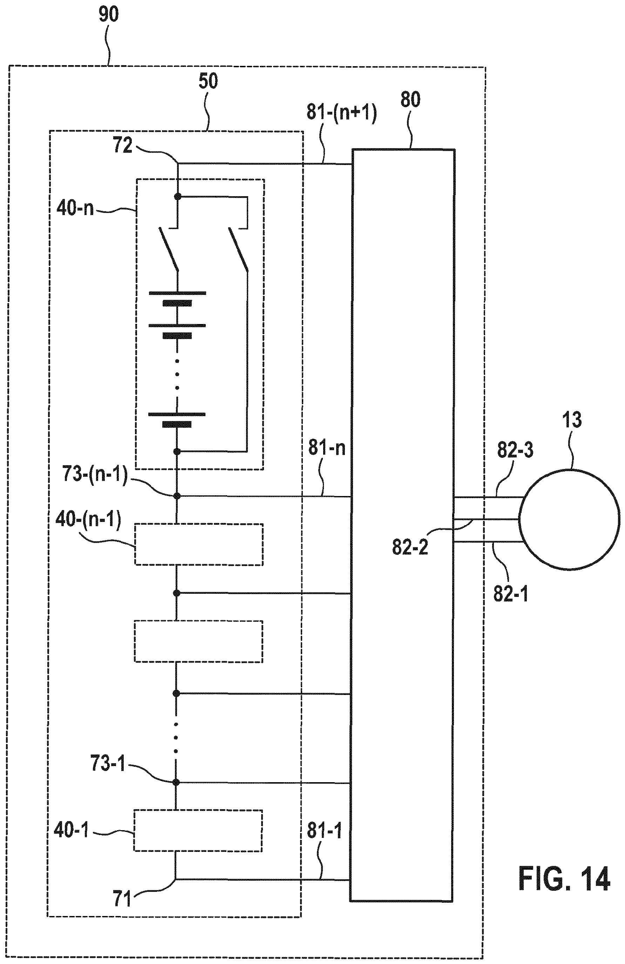

Figur 14 zeigt eine elektrische Antriebseinheit mit einem Asynchronmotor beziehungsweise einer Asynchronmaschine 13 und mit einer Umrichtereinheit 90 gemäß der Ausführungsform der Erfindung, welche einen Multilevel-Inverter 80 umfasst.

Der Multilevel-Inverter 80 weist (n+1) Eingänge 81-1, ..., 81-(n+1) und drei Ausgänge 82-1, 82-2, 82-3 auf und ist dazu ausgebildet, an jedem seiner Ausgänge 82-1, 82-2, 82-3 eins der Potentiale auszugeben, welches jeweils an einem seiner Eingänge 81-1, ..., 81-(n+1) anliegt. Die Ausgänge 82-1, 82-2, 82-3 des Multilevel-Inverters 80 sind mit den Spulen der Asynchronmaschine 13 verbunden. Da die meisten verfügbaren Elektromotoren auf einen Betrieb mit drei Phasensignalen ausgelegt sind, besitzt der Multilevel-Inverter 80 bevorzugt genau drei Ausgänge 82-1, 82-2, 82-3. Die Eingänge 81-1, ..., 81-(n+1) des Multilevel-Inverters 80 sind sowohl mit (n-1) Mittelabgriffen 73-1, ..., 73-(n-1) als auch den Polen 71, 72 eines Batteriemodulstrangs 50 verbunden, welcher ähnlich wie in dem ersten Ausführungsbeispiel n Batteriemodule 40-1, ..., 40-n mit Koppeleinheiten umfasst. Dadurch, dass das Potential an jedem der Ausgänge 82-1, 82-2, 82-3 des Multilevel-Inverters 80 variabel ist und von den Potentialwerten an seinen Eingängen 81-1, ..., 81-(n+1) abhängt und die an diesen Eingängen 81-1, ..., 81-(n+1) anliegenden Potentialwerte wiederum durch geeignete Ansteuerung der n Batteriemodule 40-1, ..., 40-n einstellbar sind, gibt es mehrere mögliche Kombinationen der Ansteuerung des Batteriemodulstrangs 50 und des Multilevel-Inverters 80, welche ein gleiches Phasensignal an den Ausgängen 82-1, 82-2, 82-3 des Multilevel-Inverters 80 erzeugen, bevorzugt eine näherungsweise sinusförmige Wechselspannung.

Die Phasensignale an den Ausgängen 82-1, 82-2, 82-3 des Multilevel-Inverters 80 können somit in Stufen eingestellt werden. Durch Einstellung eines treppenförmigen Verlaufs des Potentials an den Ausgängen 82-1, 82-2, 82-3 des Multilevel-Inverters 80 können die Verluste in der Asynchronmaschine 13 reduziert werden, da der übliche Wechsel zwischen positivem und negativem Zwischenkreispotential in der erfindungsgemäßen Anordnung ausbleibt. Auf diese Weise wird eine Verbesserung der elektromagnetischen Verträglichkeit des Antriebs der Asynchronmaschine 13 erreicht, da die Änderungen im Potential an dessen Eingängen geringer sind. Es wird ebenfalls eine Verbesserung des Wirkungsgrades der Leistungselektronik in der erfindungsgemäßen Anordnung dadurch erreicht, dass in dem Multilevel-Inverter 80 Schalter mit Metall-Oxid-Halbleiter-Feldeffekttransistoren (MOSFET) anstelle von Bipolartransistoren mit isolierter Gate-Elektrode (IGBT) zum Einsatz kommen können.

Dadurch, dass es mehrere mögliche Kombinationen der Ansteuerung des Batteriemodulstrangs 50 und des Multilevel-Inverters 80 zur Erzeugung eines vorbestimmten Phasensignals an den Ausgängen 82-1, 82-2, 82-3 des Multilevel-Inverters 80 und somit auch in den Spulen der Asynchronmaschine 13 gibt, kann die Ansteuerung dahingehend optimiert werden, dass die Batteriemodule 40 gleichmäßig entladen werden können, und somit beispielsweise keine unerwünschte Reduzierung der Reichweite eines Elektrofahrzeugs entsteht, welche durch eine ungleichmäßige Ausnutzung der Batteriezellen 41 verursacht wird. Dies hat den Vorteil, dass die aus dem Stand der Technik bekannten Vorteile eines Multilevel-Inverters, insbesondere sein hoher Wirkungsgrad, in elektrischen Antrieben genutzt werden können, ohne dass es zu einer belastungsabhängig unterschiedlichen Entladung der einzelnen Batteriemodule 40 kommen muss.

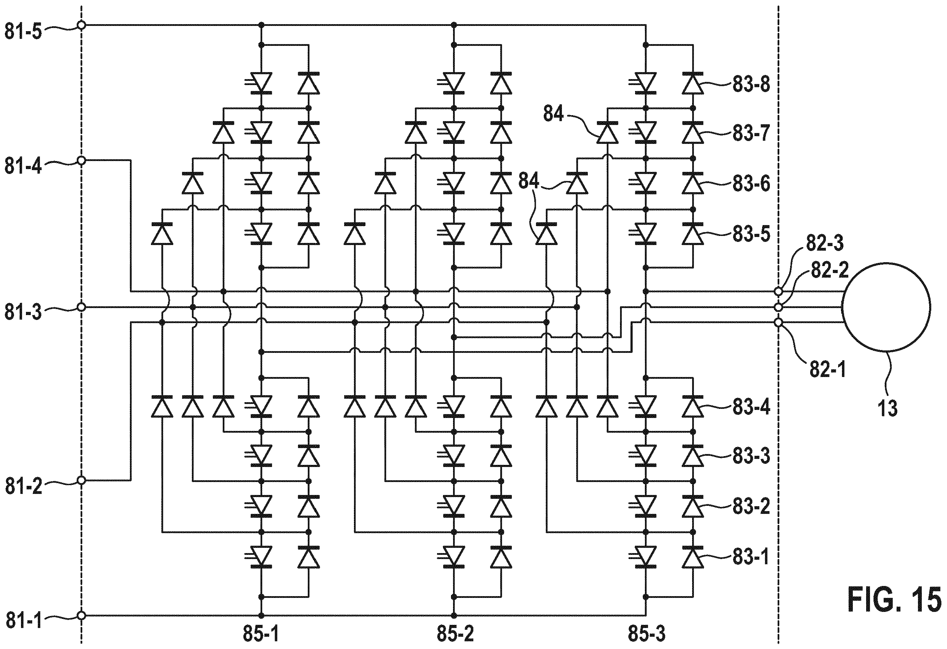

Figur 15 zeigt ein Beispiel eines vierstufigen Multilevel-Inverters, welcher in der erfindungsgemäßen Umrichtereinheit 90 einsetzbar ist und fünf Eingänge 81-1, ..., 81-5 sowie drei Ausgänge 82-1, 82-2, 82-3 umfasst, wobei Letztere mit den Eingängen der Asynchronmaschine 13 verbunden sind. Die Phasensignale an den drei Ausgängen 82-1, 82-2, 82-3 sind jeweils durch Schaltelemente steuerbar, welche für jeden der drei Ausgänge 82-1, 82-2, 82-3 in einem von drei Strängen 85-1, 85-2, 85-3 angeordnet sind. Die Funktionsweise des in Figur 15 dargestellten Multilevel-Inverters 80 wird im Folgenden exemplarisch anhand des Stranges 85-3 beschrieben, welcher das Phasensignal am Ausgang 82-3 bestimmt.

Der Strang 85-3 umfasst acht Schaltelemente 83-1, ..., 83-8, welche jeweils aus einem ein- und ausschaltbaren Halbleiterventil und einer zu diesem parallel geschalteten Diode bestehen. Die Schaltelemente 83-1, ..., 83-8 werden in komplementäre Paare (83-1, 83-5), (83-2, 83-6), (83-3, 83-7), (83-4, 83-8) eingeteilt. Die Ansteuerung jedes der komplementären Paare (83-1, 83-5), (83-2, 83-6), (83-3, 83-7), (83-4, 83-8) wird so durchgeführt, dass wenn eins der Schaltelemente geschlossen wird, das dazu komplementäre Schaltelement geöffnet wird. Wird der geöffnete Zustand durch 0, der geschlossene Zustand durch 1 dargestellt, so wird wie folgt ein Potential an dem Ausgang 82-3 des Multilevel-Inverters durch eine Kombination der Zustände der Schaltelemente 83-1, ..., 83-8 ausgegeben, welches dem Potential an einem der Eingänge 81-1, ..., 81-5 des Multilevel-Inverters 80 gleicht:
Potential am Ausgang 82-3 = Potential am Eingang 81-1: 11110000;
Potential am Ausgang 82-3 = Potential am Eingang 81-2: 01111000;
Potential am Ausgang 82-3 = Potential am Eingang 81-3: 00111100;
Potential am Ausgang 82-3 = Potential am Eingang 81-4: 00011110;
Potential am Ausgang 82-3 = Potential am Eingang 81-5: 00001111.

Wird beispielsweise die Schaltkombination 00011110 gewählt, so dass das Potential am Ausgang 82-3 dem Potential am Eingang 81-4 gleicht, so kann für den Fall, dass die Eingänge 81-1, ..., 81-5 mit Abgriffen des Batteriemodulstrangs 50 verbunden sind, zwischen denen jeweils nur ein Batteriemodul 40 angeordnet ist, je nach Ansteuerung der Batteriemodule 40 eine Spannung erzeugt werden, welche zwischen 0 V und der Summe von drei Modulspannungen entspricht, wobei diese Spannung in Stufen einstellbar ist.

Der in Figur 15 dargestellte Multilevel-Inverter arbeitet mit einer Spannungsbegrenzung über ein Netzwerk von Dioden 84. Diese dienen der Zuführung der Abgriffe 71, 73-1, ..., 73-(n-1), 72 des Batteriemodulstrangs 50 an die Schaltelemente 83-1, ..., 83-8 bei gleichzeitiger Verhinderung eines Kurzschlusses von Batteriemodulen 40, welcher bei direkter Anbindung ohne Dioden 84 erfolgen könnte. Die Dioden 84 müssen hinsichtlich ihrer Sperrfähigkeit unterschiedlich dimensioniert werden. Die größte Sperrspannung im Bereich der Schaltelemente 83-5, ..., 83-8 muss beispielsweise die Diode 84 aufnehmen, welche zwischen den Eingang 81-2 und das Schaltelement 83-5 geschaltet ist. Entsprechend spiegelbildlich verhält es sich bei den Dioden 84 im Bereich der Schaltelemente 83-1, ..., 83-4.

Zwischen benachbarten Abgriffen 71, 72, 73 des Batteriemodulstrangs 50 können ein oder mehrere Batteriemodule 40 mit jeweils einer Koppeleinheit 30 oder 70 angeordnet sein, welche also jeweils zwei oder drei Potentialwerte generieren können.

Allen Ausführungsformen der erfindungsgemäßen Umrichtereinheit 90 ist gemeinsam, dass an den drei Ausgängen der Umrichtereinheit 90 ein im Wesentlichen sinusförmiges Spannungssignal vorbestimmter Frequenz zur Verfügung gestellt wird.

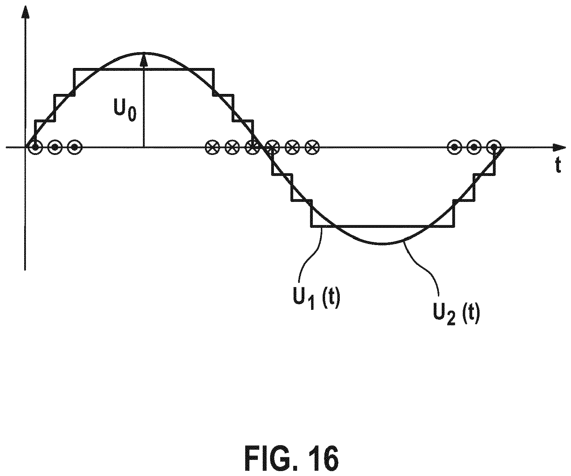

Figur 16 zeigt einen zeitlichen Verlauf einer an einem der drei Ausgänge der erfindungsgemäßen Umrichtereinheit 90 anliegenden Spannung U₁(t). Die Spannung U₁(t) nimmt für bestimmte Zeitintervalle jeweils konstante Werte an und folgt hierbei näherungsweise dem sinusförmigen Verlauf der Sollspannung U₂(t). Der sinusförmige Sollspannungsverlauf U₂(t) kann beispielsweise eine Amplitude U₀ von 20 V und eine Frequenz von 50 Hz aufweisen.

Auf der Zeitachse von Figur 16 sind diejenigen Zeitpunkte markiert, in welchen eine stufenförmige Erhöhung oder Verringerung der Spannung U₁(t) erfolgt, beispielsweise durch das Hinzuschalten oder das Überbrücken von Batteriemodulen in einem der Batteriemodulstränge 50-1, 50-2, 50-3 in der ersten Ausführungsform der erfindungsgemäßen Umrichtereinheit 90. Wird eine höhere Anzahl von Batteriemodulen in einem der Batteriemodulstränge 50-1, 50-2, 50-3 vorgesehen, so nähert sich der Verlauf U₁(t) dem Sollspannungsverlauf von U₂(t) an, und Wirbelstromverluste im Läufer der Asynchronmaschine 13, welche auf starke zeitliche Veränderungen des Spannungsverlaufs U₁(t) zurückzuführen sind, werden reduziert.

## Patentansprüche

1. Umrichtereinheit (90) mit mindestens einem Ausgang, wobei der Ausgang an eine Spule einer Asynchronmaschine (13) anschließbar und die Umrichtereinheit (90) dazu ausgelegt ist, an ihrem Ausgang mehrere Spannungsstufen zur Verfügung zu stellen, wobei die Umrichtereinheit (90) einen Multilevel-Inverter (80) mit mindestens einem Ausgang (82-1, 82-2, 82-3) umfasst, wobei der Ausgang (82-1, 82-2, 82-3) des Multilevel-Inverters (80) den Ausgang der Umrichtereinheit (90) bildet, **dadurch gekennzeichnet, dass** die Umrichtereinheit (90) mindestens einen Batteriemodulstrang (50) mit einer Mehrzahl von in Serie geschalteten Batteriemodulen (40-1, ..., 40-n) umfasst, wobei jedes Batteriemodul (40-1, ..., 40-n) wenigstens eine Batteriezelle (41), wenigstens eine Koppeleinheit (70), einen ersten Anschluss (42) und einen zweiten Anschluss (43) umfasst und dazu ausgebildet ist, in Abhängigkeit einer Ansteuerung der Koppeleinheit (70) wahlweise einen von mindestens drei Schaltzuständen einzunehmen, wobei in einem ersten Schaltzustand der erste Anschluss (42) und der zweite Anschluss (43) des Batteriemoduls (40-1, ..., 40-n) verbunden sind, in einem zweiten Schaltzustand die wenigstens eine Batteriezelle (41) zwischen den ersten Anschluss (42) und den zweiten Anschluss (43) mit einer ersten Polarität geschaltet und in einem dritten Schaltzustand die wenigstens eine Batteriezelle (41) zwischen den ersten Anschluss (42) und den zweiten Anschluss (43) mit einer der ersten entgegengesetzten Polarität geschaltet sind und wobei an dem Batteriemodulstrang (50) mehrere Mittelabgriffe (73-1, ..., 73-(n-1)) angeordnet sind, mit welchen ein Potential an einer Verbindung zwischen jeweils zwei Batteriemodulen (40-1, ..., 40-n) abgreifbar ist, und wobei Eingänge des Multilevel-Inverters (80) mit den Mittelabgriffen (73-1, ..., 73-(n-1)) verbunden sind.

2. Umrichtereinheit (90) nach Anspruch 1, wobei die Umrichtereinheit (90) dazu ausgelegt ist, an ihrem Ausgang ein im Wesentlichen sinusförmiges Spannungssignal vorbestimmter Frequenz zur Verfügung zu stellen.

3. Umrichtereinheit (90) nach Anspruch 1 oder 2, wobei die Umrichtereinheit (90) drei Ausgänge umfasst, welche an drei Spulen der Asynchronmaschine (13) anschließbar sind.

4. Batterie (10) umfassend mindestens eine Umrichtereinheit (90) nach einem der vorangehenden Ansprüche.

5. Antriebseinheit umfassend mindestens eine Asynchronmaschine sowie mindestens eine Umrichtereinheit (90) nach einem der Ansprüche 1 bis 3 oder eine Batterie (10) nach Anspruch 4, wobei der Ausgang der Umrichtereinheit (90) an eine Spule der Asynchronmaschine (13) angeschlossen ist.

6. Ein Kraftfahrzeug mit einer Antriebseinheit nach Anspruch 5.

## Claims

1. Converter unit (90) comprising at least one output, wherein the output is connectable to a coil of an asynchronous machine (13), and the converter unit (90) is designed to provide a plurality of voltage levels at its output, wherein the converter unit (90) comprises a multilevel inverter (80) comprising at least one output (82-1, 82-2, 82-3), wherein the output (82-1, 82-2, 82-3) of the multilevel inverter (80) forms the output of the converter unit (90), **characterized in that** the converter unit (90) comprises at least one battery module string (50) comprising a plurality of battery modules (40-1, ..., 40-n) connected in series, wherein each battery module (40-1, ..., 40-n) comprises at least one battery cell (41), at least one coupling unit (70), a first connection (42) and a second connection (43) and is designed to assume optionally one of at least three switching states depending on an actuation of the coupling unit (70), wherein, in a first switching state, the first connection (42) and the second connection (43) of the battery module (40-1, ..., 40-n) are connected, in a second switching state, the at least one battery cell (41) is connected between the first connection (42) and the second connection (43) with a first polarity and, in a third switching state, the at least one battery cell (41) is connected between the first connection (42) and the second connection (43) with a polarity which is opposite the first polarity and wherein a plurality of center taps (73-1, ..., 73-(n-1)) are arranged on the battery module string (50), with which center taps a potential can be tapped off at a connection between in each case two battery modules (40-1, ..., 40-n), and wherein inputs of the multilevel inverter (80) are connected to the center taps (73-1, ..., 73-(n-1)).

2. Converter unit (90) according to Claim 1, wherein the converter unit (90) is designed to provide a substantially sinusoidal voltage signal of a predetermined frequency at its output.

3. Converter unit (90) according to Claim 1 or 2, wherein the converter unit (90) comprises three outputs, which are connectable to three coils of the asynchronous machine (13).

4. Battery (10) comprising at least one converter unit (90) according to one of the preceding claims.

5. Drive unit comprising at least one asynchronous machine and at least one converter unit (90) according to one of Claims 1 to 3 or a battery (10) according to Claim 4, wherein the output of the converter unit (90) is connected to a coil of the asynchronous machine (13).

6. Motor vehicle comprising a drive unit according to Claim 5.

## Revendications

1. Unité-convertisseur (90) comportant au moins une sortie, dans laquelle la sortie peut être raccordée à une bobine d'une machine asynchrone (13) et l'unité-convertisseur (90) est conçue pour délivrer sur sa sortie plusieurs étapes de tension, dans lequel l'unité-convertisseur (90) comprend un onduleur à niveaux multiples (80) ayant au moins une sortie (82-1, 82-2, 82-3), dans lequel la sortie (82-1, 82-2, 82-3) de l'onduleur à niveaux multiples (80) constitue la sortie de l'unité-convertisseur (90), **caractérisée en ce que** l'unité-convertisseur (90) comprend au moins une chaîne de modules de batterie (50) comportant une pluralité de modules de batterie (40-1, ..., 40-n) connectés en série, dans laquelle chaque module de batterie (40-1, ..., 40-n) comprend au moins une cellule de batterie (41), au moins une unité de couplage (70), une première borne (42) et une deuxième borne (43) et est conçue pour passer sélectivement dans l'un d'au moins trois états de commutation en fonction d'une commande de l'unité de couplage (70), dans laquelle, dans un premier état de commutation, la première borne (42) et la deuxième borne (43) du module de batterie (40-1, ..., 40-n) sont reliées, dans un deuxième état de commutation, l'au moins une cellule de batterie (41) est connectée avec une première polarité entre la première borne (42) et la deuxième borne (43), et dans un troisième état de commutation, l'au moins une cellule de batterie (41) est connectée avec une polarité opposée à la première polarité entre la première borne (42) et la deuxième borne (43), et dans laquelle il est prévu sur la chaîne de modules de batterie (50) plusieurs prises médianes (73-1, ..., 73-(n-1)) avec lesquelles un potentiel peut être prélevé au niveau d'une connexion entre deux modules de batterie (40-1, ..., 40-n) respectifs, et dans laquelle des entrées de l'onduleur à niveaux multiples (80) sont connectées aux prises médianes (73-1, ..., 73-(n-1)).

2. Unité-convertisseur (90) selon la revendication 1, dans laquelle l'unité-convertisseur (90) est conçue pour fournir à sa sortie un signal de tension sensiblement sinusoïdal ayant une fréquence prédéterminée.

3. Unité-convertisseur (90) selon la revendication 1 ou 2, dans laquelle l'unité-convertisseur (90) comprend trois sorties qui peuvent être raccordées à trois bobines de la machine asynchrone (13).

4. Batterie (10) comprenant au moins une unité-convertisseur (90) selon l'une quelconque des revendications précédentes.

5. Unité d'entraînement comprenant au moins une machine asynchrone ainsi qu'au moins une unité-convertisseur (90) selon l'une quelconque des revendications 1 à 3 ou une batterie - (10) selon la revendication 4, dans laquelle la sortie de l'unité-convertisseur (90) est raccordée à une bobine de la machine asynchrone (13).

6. Véhicule automobile comportant une unité d'entraînement selon la revendication 5.
